# EUROPÄISCHE PATENTSCHRIFT

(11) **EP 1 966 258 B1**
(45) Veröffentlichungstag und Bekanntmachung des Hinweises auf die Patenterteilung: **10.12.2014**
(21) Anmeldenummer: 06841081.0
(22) Anmeldetag: 20.12.2006
(51) Int. Cl.: C08F 220/02, C08F 222/00, C08F 216/14, C04B 24/26

(54) **COPOLYMERE AUF BASIS VON UNGESÄTTIGTEN MONO- ODER DICARBONSÄURE-DERIVATEN UND OXYALKYLENGLYKOL-ALKENYLETHERN, VERFAHREN ZU DEREN HERSTELLUNG UND IHRE VERWENDUNG**
COPOLYMERS BASED ON UNSATURATED MONOCARBOXYLIC OR DICARBOXYLIC ACID DERIVATIVES AND OXYALKYLENE GLYCOL ALKENYL ETHERS, PROCESS FOR PREPARING THEM AND THEIR USE
COPOLYMERES A BASE DE DERIVES D ACIDES MONOCARBOXYLIQUES OU DICARBOXYLIQUES INSATURES ET D ETHERS ALCENYLIQUES D OXYALKYLENE GLYCOL, LEUR PROCEDE DE FABRICATION ET LEUR UTILISATION

(30) Priorität: 21.12.2005 DE 102005061153
(43) Veröffentlichungstag der Anmeldung: 10.09.2008
(73) Patentinhaber: Evonik Degussa GmbH, 45128 Essen (DE)
(72) Erfinder: ALBRECHT, Gerhard, 83209 Prien a. Chiemsee (DE); LORENZ, Klaus, 84539 Zangberg (DE); SCHOLZ, Christian, 83308 Trostberg (DE); WAGNER, Petra, 83308 Trostberg (DE)
(86) Internationale Anmeldenummer: PCT/EP2006/012351
(87) Internationale Veröffentlichungsnummer: WO 2007/076941

(56) Entgegenhaltungen:
- EP-A- 0 560 602
- EP-A- 0 894 811
- EP-A2- 0 606 055
- EP-A2- 0 736 553
- WO-A-00/77058
- WO-A-2005/075529
- US-A1- 4 471 100

## Beschreibung

Die vorliegende Erfindung betrifft Copolymere auf Basis von ungesättigten Mono- oder Dicarbonsäure-Derivaten und Oxyalkylenglykol-Alkenylethern, Verfahren zu deren Herstellung sowie die Verwendung dieser Copolymere als Zusatzmittel für wässrige Suspensionen auf Basis von mineralischen oder bituminösen Bindemitteln.

Es ist bekannt, dass man wässrigen Suspensionen von hydraulischen Bindemitteln zur Verbesserung ihrer Verarbeitbarkeit, d. h. Knetbarkeit, Streichfähigkeit, Spritzbarkeit, Pumpbarkeit oder Fließfähigkeit, oft Zusatzmittel in Form von Dispergiermitteln zusetzt. Diese in der Regel ionische Gruppen enthaltenden Zusatzmittel sind in der Lage, Feststoffagglomerate aufzubrechen, die gebildeten Teilchen zu dispergieren und auf diese Weise die Verarbeitbarkeit speziell von hochkonzentrierten Suspensionen zu verbessern. Dieser Effekt wird gezielt bei der Herstellung von Baustoffmischungen, auf der Basis von Zement, Kalk sowie calciumsulfatbasierenden hydraulischen Bindemitteln ggf. auch im Gemisch mit organischen (z. B. bituminösen) Anteilen und weiterhin für keramische Massen, Feuerfestmassen und Ölfeldbaustoffe ausgenutzt.

Um diese Baustoffmischungen auf der Basis der genannten Bindemittel in eine gebrauchsfertige, verarbeitbare Form zu überführen, ist in der Regel wesentlich mehr Anmachwasser erforderlich, als für den nachfolgenden Hydratations- bzw. Erhärtungsprozess notwendig wäre. Der durch das überschüssige, später verdunstende Wasser gebildete Hohlraumanteil im Baukörper führt zu signifikant verschlechterten mechanischen Festigkeiten und Beständigkeiten.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern, werden Zusatzmittel eingesetzt, die im allgemeinen als Wasserreduktions- oder Fließmittel bezeichnet werden. Als derartige Mittel sind vor allem Polykondensationsprodukte auf Basis von Naphthalin- oder Alkylnaphthalinsulfonsäuren (vgl. EP-A 214 412) bzw. Sulfonsäuregruppen enthaltende Melamin-Formaldehydharze (vgl. DE-PS 16 71 017) bekannt.

Nachteilig bei diesen Zusatzmitteln ist die Tatsache, dass ihre ausgezeichnete verflüssigende Wirkung insbesondere im Betonbau nur über eine kurze Zeitspanne bestehen bleibt. Der Abfall der Verarbeitbarkeit von Betonmischungen ("Slump-loss") in kurzer Zeit kann insbesondere dort zu Problemen führen, wo zwischen Herstellung und Einbau des Frischbetons, bspw. bedingt durch lange Förder- und Transportwege, ein großer Zeitraum liegt.

Ein zusätzliches Problem ergibt sich bei der Anwendung derartiger Fließmittel im Bergbau und im Innenbereich (Gipskartonplattentrocknung, Anhydritfließestrich-Anwendungen, Betonfertigteilherstellung), wo es zur Freisetzung des in den Produkten herstellungsbedingt enthaltenen toxischen Formaldehyds und damit zu beträchtlichen arbeitshygienischen Belastungen kommen kann. Aus diesem Grund wurde auch schon versucht, statt dessen formaldehydfreie Betonfließmittel aus Maleinsäuremonoestern und Styrol bspw. entsprechend der EP-A 306 449 zu entwickeln. Die Fließwirkung von Betonmischungen kann mit Hilfe dieser Zusatzmittel über einen ausreichend langen Zeitraum aufrechterhalten werden, jedoch geht die ursprünglich vorhandene, sehr hohe Dispergierwirkung nach Lagerung der wässrigen Zubereitung des Fließmittels, bedingt durch die Hydrolyse des polymeren Esters, sehr schnell verloren.

Dieses Problem tritt bei Fließmitteln aus Alkylpolyethylenglykolallylethern und Maleinsäureanhydrid entsprechend der EP-A 373 621 nicht auf. Jedoch handelt es sich bei diesen Produkten, ähnlich wie bei den zuvor beschriebenen, um oberflächenaktive Verbindungen, die unerwünscht hohe Anteile von Luftporen in die Betonmischung einführen, woraus Einbußen bei der Festigkeit und Beständigkeit des erhärteten Baustoffs resultieren.

Aus diesem Grund ist es erforderlich, den wässrigen Lösungen dieser Polymerverbindungen Antischaummittel, wie z. B. Tributylphosphat, Silikonderivate und verschiedene wasserunlösliche Alkohole im Konzentrationsbereich von 0,1 bis 2 Gew.-% bezogen auf den Feststoffgehalt, zuzusetzen. Das Einmischen dieser Komponenten und die Aufrechterhaltung einer lagerstabilen homogenen Form der entsprechenden Formulierungen gestaltet sich auch selbst dann recht schwierig, wenn diese Antischaummittel in Form von Emulsionen zugesetzt werden.

Durch den vollständigen oder zumindest teilweisen Einbau einer entschäumend oder antilufteinführenden Struktureinheit in das Copolymer kann das Problem der Entmischung gemäß der DE 195 13 126 A1 gelöst werden.

Es hat sich jedoch gezeigt, dass die hohe Wirksamkeit und der geringe "Slump-loss" der hier beschriebenen Copolymere oft zu unzureichenden 24 Stunden-Festigkeiten des Betons führen. Auch weisen derartige Copolymere insbesondere dort nicht die optimalen Eigenschaften auf, wo mit geringstmöglichem Wasseranteil ein besonders dicht gefügter und daher hochfester und hochbeständiger Beton erzeugt und auf eine Dampfhärtung (Fertigteilindustrie) zur Beschleunigung des Erhärtungsprozesses verzichtet werden soll.

Zur Lösung dieses Problems wurden gemäß der DE 199 26 611 A1 Copolymere von ungesättigten Mono- oder Dicarbonsäure-Derivaten und Oxyalkylenglykol-Alkenylethern vorgeschlagen, die mit geringer Dosierung die Verarbeitbarkeit hochkonzentrierter Baustoffmischungen praxisgerecht lange aufrechterhalten können, bei einer durch eine extreme Absenkung des Wasser/Bindemittel-Verhältnisses gleichzeitig erhöhten Festigkeit im erhärteten Zustand des Baustoffs. Als nachteilig hat es sich jedoch erwiesen, dass sich die entsprechenden Copolymere nur mit relativ kurzen Polymerketten und einem vergleichsweise niedrigen mittleren Molekulargewicht herstellen lassen, weshalb die Dispergierwirkung dieser Copolymere bisher nicht optimal war.

WO 2005/075529 A2 offenbart Copolymere auf Basis von ungesättigten Mono- oder Dicarbonsäure-Derivaten und Oxyalkylenglykol-Alkenylethern, welche durch Copolymerisieren von 25 bis 98.99 Mol-% eines ungesättigten Mono- oder Dicarbonsäure-Derivats, 1 bis 48.9 Mol-% eines Oxyalkylenglykol-Alkenylethers, 0.01 bis 6 Mol-% einer vinylischen Polyalkylenglykol- oder Ester-Verbindung und 0 bis 60 Mol-% eines Dicarbonsäure-Derivats in Gegenwart eines radikalischen Polymerisationsinitiators hergestellt und als Zusatzmittel für wässrige Suspensionen auf Basis von mineralischen oder bituminösen Bindemitteln verwendet werden können.

US 4,471,100 beschreibt Copolymere der allgemeinen Formel (I), welche durch Copolymerisieren von 25 bis 75 Mol-% eines Polyalkylenglykolmonoallylethers der allgemeinen Formel (II) mit 25 bis 75 Mol-% eines Maleinsäure-artigen Monomers der allgemeinen Formel (III) und 0 bis 50 Mol-% eines hiermit copolymerisierbaren Vinylmonomers in Gegenwart eines Polymerisationsinitiators sowie in Gegenwart oder Abwesenheit eines Lösungsmittels bei Temperaturen im Bereich von 0 bis 150°C hergestellt und als Dispergiermittel für Zement eingesetzt werden können.

EP 0 894 811 A1 offenbart Copolymere auf Basis von ungesättigten Dicarbonsäure-Derivaten und Oxyalkylenglykol-Alkenylethern, welche durch Copolymerisieren von 1 bis 90 Mol-% eines ungesättigten Dicarbonsäure-Derivats, 0.5 bis 80 Mol-% eine Oxyalkylenglykol-Alkenylethers, 0.5 bis 80 Mol-% eines ungesättigten Dicarbonsäureimids oder/und -amids und 1.0 bis 90 Mol-% eines vinylischen Monomers in Gegenwart eines radikalischen Polymerisationsinitiators hergestellt und als Zusatzmittel für hydraulische Bindemittel verwendet werden können.

EP 0 606 055 A2 betrifft Terpolymere auf Basis von α,β-ungesättigten Dicarbonsäureanhydriden, α,β-ungesättigten Verbindungen und Polyoxyalkylenethern von niederen, ungesättigten Alkoholen, welche durch Copolymerisieren eines α,β-ungesättigten Dicarbonsäureanhydrids der allgemeinen Formel (F) oder/und (G) mit einer α,β-ungesättigten Verbindung der allgemeinen Formel (H) und einem Polyoxyalkylenether der allgemeinen Formel (J) hergestellt und als Paraffininhibitoren in Rohölen und Erdölprodukten eingesetzt werden können.

EP 0 560 602 A1 offenbart Zementzusammensetzungen mit hoher Fließfähigkeit, welche mindestens ein Copolymer umfassen, das durch Copolymerisieren von Maleinsäureanhydrid mit einem Alkenylether der allgemeinen Formel R¹O(AO)ₙR² hergestellt wird, wobei R¹ eine Alkenylgruppe mit 2 bis 5 Kohlenstoffatomen darstellt, R² eine Alkylgruppe mit 1 bis 4 Kohlenstoffatomen darstellt, AO eine Oxyalkylengruppe mit 2 bis 18 Kohlenstoffatomen darstellt, und n eine Zahl von 60 bis 95 ist.

Der vorliegenden Erfindung lag daher die Aufgabe zugrunde, neue Copolymere bereitzustellen, welche die genannten Nachteile entsprechend dem Stand der Technik nicht aufweisen, sondern aufgrund von langen Polymerketten und hohen mittleren Molekulargewichten eine verbesserte Dispergier- bzw. Verflüssigungswirkung aufweisen.

Diese Aufgabe wurde erfindungsgemäß durch die Copolymere entsprechend Anspruch 1 gelöst. Es hat sich nämlich überraschenderweise gezeigt, dass die erfindungsgemäßen Produkte auf der Basis von ungesättigten Mono- oder Dicarbonsäure-Derivaten und Oxyalkylenglykol-Alkenylethern wässrigen Bindemittelsuspensionen eine sehr gute Dispergier- bzw. Verflüssigungswirkung bei gleichzeitig ausgezeichneten Verarbeitungseigenschaften verleihen. Außerdem sind die erfindungsgemäß eingesetzten Oxyalkylenglykol-Alkenylether technisch relativ einfach sowie kostengünstig herzustellen und benötigen vergleichsweise niedrige Initiatorkonzentrationen bei der Copolymerisation, was ebenfalls nicht vorhersehbar war.

Die Copolymere entsprechend der vorliegenden Erfindung enthalten bevorzugt die Baugruppen a), b), ggf. c) und ggf. d) und keine weiteren Baugruppen. Die erste Baugruppe a) stellt ein Mono- oder Dicarbonsäure-Derivat mit den allgemeinen Formeln (la) und/oder (Ib) dar.

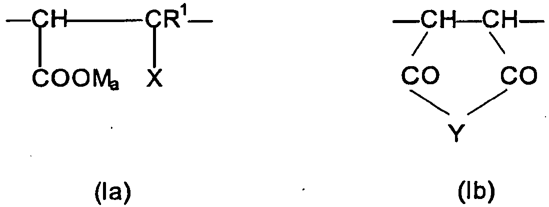

Beim Mono- oder Dicarbonsäure-Derivat (Ia) steht R¹ für Wasserstoff oder einen aliphatischen Kohlenwasserstoffrest mit 1 bis 20 C-Atomen, vorzugsweise eine Methylgruppe. X bedeutet H, -COOMₐ, -CO-O-(CₘH₂ₘO). ₙ-R² oder -CO-NH-(CₘH₂ₘO)ₙ-R² mit folgender Bedeutung für M, a, m, n und R²:

M bedeutet Wasserstoff, ein ein- oder zweiwertiges Metallkation (vorzugsweise Natrium-, Kalium-, Calcium- oder Magnesium-Ion), Ammonium, ein organischer Aminrest sowie a = ½ oder 1, je nachdem, ob es sich bei M um ein ein- oder zweiwertiges Kation handelt. Als organische Aminreste werden vorzugsweise substituierte Ammonium-Gruppen eingesetzt, die sich ableiten von primären, sekundären oder tertiären C₁₋₂₀-Alkylaminen, C₁₋₂₀-Alkanolaminen, C₅₋₈-Cycloalkylaminen und C₈₋₁₄-Arylaminen. Beispiele für die entsprechenden Amine sind Methylamin, Dimethylamin, Trimethylamin, Ethanolamin, Diethanolamin, Triethanolamin, Methyldiethanolamin, Cyclohexylamin, Dicyclohexylamin, Phenylamin, Diphenylamin in der protonierten (Ammonium)Form.

R² bedeutet Wasserstoff, ein aliphatischer Kohlenwasserstoffrest mit 1 bis 20 C-Atomen, ein cycloaliphatischer Kohlenwasserstoffrest mit 5 bis 8 C-Atomen, ein Arylrest mit 6 bis 14 C-Atomen, der ggf. noch substituiert sein kann, m = 2 bis 4 sowie n = 0 bis 200, vorzugsweise 1 bis 150. Die aliphatischen Kohlenwasserstoffe können hierbei linear oder verzweigt sowie gesättigt oder ungesättigt sein. Als bevorzugte Cycloalkylreste sind Cyclopentyl- oder Cyclohexylreste, als bevorzugte Arylreste Phenyl- oder Naphthylreste anzusehen, die insbesondere noch durch Hydroxyl-, Carboxyl- oder Sulfonsäuregruppen substituiert sein können.

Anstelle des oder neben dem Mono- oder Dicarbonsäure-Derivat gemäß Formel (la) kann die Baugruppe a) auch in cyclischer Form entsprechend Formel (Ib) vorliegen, wobei Y = O (Säureanhydrid) oder NR² (Säureimid) darstellen kann mit der oben bezeichneten Bedeutung für R².

Die zweite Baugruppe b) entspricht Formel (II) 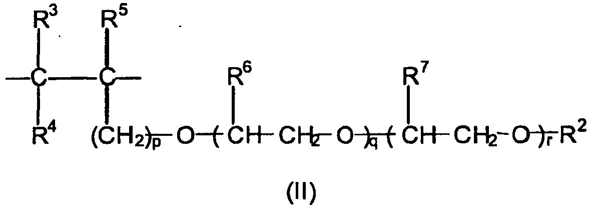 wobei R³ = H, ein aliphatischer Kohlenwasserstoffrest mit 1 bis 6 C-Atomen, R⁴ = ein aliphatischer Kohlenwasserstoffrest mit 1 bis 6 C-Atomen, ein cycloaliphatischer Kohlenwasserstoffrest mit 5 bis 8 C-Atomen sowie Phenyl, R⁵ = H, ein aliphatischer Kohlenwasserstoffrest mit 1 bis 5 C-Atomen, R⁶, R⁷ = unabhängig voneinander H, ein aliphatischer Kohlenwasserstoffrest mit 1 bis 6 C-Atomen, p = 0 bis 3, q + r = 0 bis 500 darstellen und R² oben genannte Bedeutung besitzt.

Gemäß einer bevorzugten Ausführungsform kann p in Formel (II) 0 sein; d. h. es handelt sich um Vinylpolyalkoxylate.

Die dritte Baugruppe c) entspricht den Formeln (IIIa) oder (IIIb)

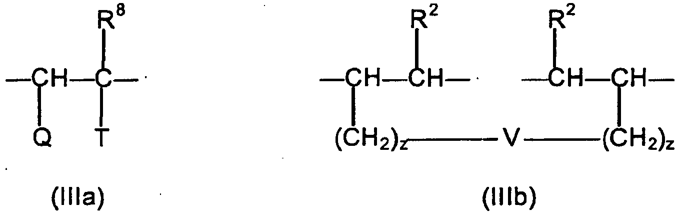

In Formel (IIIa) kann R⁸ = H oder CH₃ sein, je nachdem es sich um Acryl- oder Methacrylsäure-Derivate handelt. Q kann hierbei -H, COOMₐ oder -COOR⁹ bedeuten, wobei a und M die oben erwähnte Bedeutung besitzen und R⁹ ein aliphatischer Kohlenwasserstoffrest mit 3 bis 20 C-Atomen, ein cycloaliphatischer Kohlenwasserstoffrest mit 5 bis 8 C-Atomen oder ein Arylrest mit 6 bis 14 C-Atomen sein kann. Der aliphatische Kohlenwasserstoffrest kann ebenfalls linear oder verzweigt, gesättigt oder ungesättigt sein. Die bevorzugten cycloaliphatischen Kohlenwasserstoffreste sind wiederum Cyclopentyl- oder Cyclohexylreste und die bevorzugten Arylreste Phenyl- oder Naphthylreste. Im Falle von T = -COOR⁹ ist Q = COOMₐ oder -COOR⁹. Für den Fall, dass T und Q = -COOR⁹ sind, leiten sich die entsprechenden Baugruppen von den Dicarbonsäureestern ab.

Neben diesen Esterstruktureinheiten können die Baugruppen c) noch andere hydrophobe Strukturelemente besitzen. Hierzu gehören die Polypropylenoxid- bzw. Polypropylenoxid-Polyethylenoxid-Derivate mit

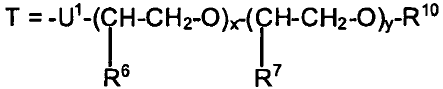

x nimmt hierbei einen Wert von 1 bis 150 und y von 0 bis 15 an. Die Alkylenoxid-Derivate können hierbei über eine Gruppierung U¹ mit dem Alkylrest der Baugruppe c) entsprechend Formel (IIIa) verknüpft sein, wobei U¹ = -CO-NH-, -O- oder -CH₂-O- sein kann. Hierbei handelt es sich um die entsprechenden Amid-, Vinyl- oder Allylether der Baugruppe entsprechend Formel (IIIa). R¹⁰ kann hierbei wiederum R² (Bedeutung von R² siehe oben) oder 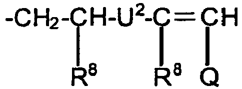 sein, wobei U² = -NH-CO-, -O-, oder -OCH₂- bedeuten kann und Q die oben beschriebene Bedeutung besitzt. Diese Verbindungen stellen Polyalkylenoxid-Derivate von den bifunktionellen Alkenylverbindungen entsprechend Formel (IIIa) dar.

Als weitere hydrophobe Strukturelemente können die Baugruppen c) noch Verbindungen gemäß der Formel (IIIa) mit T = (CH₂)_{z}-V-(CH₂)_{z}-CH=CH-R² enthalten, wobei z = 0 bis 4 und V ein -O-CO-C₆H₄-CO-O-Rest sein kann sowie R² die oben angegebene Bedeutung besitzt. Hierbei handelt es sich um die entsprechenden difunktionellen Ethylenverbindungen gemäß der Formel (IIIa), die über Estergruppierungen der Formel -O-CO-C₆H₄-CO-O-miteinander verknüpft sind und wobei nur eine Ethylengruppe copolymerisiert wurde. Diese Verbindungen leiten sich von den entsprechenden Dialkenylphenyl-dicarbonsäureestern ab.

Es ist im Rahmen der vorliegenden Erfindung auch möglich, dass nicht nur eine, sondern beide Ethylengruppen der difunktionellen Ethylenverbindungen copolymerisiert wurden. Dies entspricht im wesentlichen den Baugruppen entsprechend der Formel (IIIb) 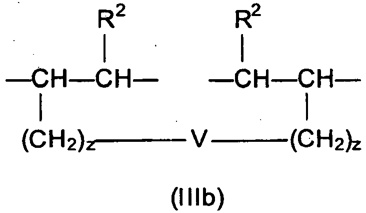 wobei R², V und z die bereits beschriebene Bedeutung besitzen.

Es ist als erfindungswesentlich anzusehen, dass die Copolymere 10 bis 90 Mol-% Baugruppen der Formeln (la) und/oder (Ib), 1 bis 89 Mol-% Baugruppen der Formel (II), 0 bis 10 Mol-% Baugruppen der Formeln (IIIa) und/oder (IIIb) enthalten.

Vorzugsweise enthalten diese Polymere 40 bis 75 Mol-% Baugruppen der Formeln (la) und/oder (Ib), 20 bis 55 Mol-% Baugruppen der Formel (II), 1 bis 5 Mol-% Baugruppen der Formeln (IIIa) und/oder (IIIb).

Gemäß einer bevorzugten Ausführungsform enthalten die erfindungsgemäßen Copolymere zusätzlich noch bis zu 50 Mol-%, insbesondere bis zu 20 Mol-% bezogen auf die Summe der Baugruppen a) bis c), Strukturen d), die auf Monomeren auf Basis von Vinyl- oder (Meth-)Acrylsäure-Derivaten wie Styrol, α-Methylstyrol, Vinylacetat, Vinylpropionat, Ethylen, Propylen, Isobuten, N-Vinylpyrrolidon, Allylsulfonsäure, Methallylsulfonsäure, Vinylsulfonsäure oder Vinylphosphonsäure beruhen.

Bevorzugte monomere (Meth-)Acrylsäure-Derivate sind Hydroxyalkyl(meth) acrylate, Acrylamid, Methacrylamid, AMPS, Methylmethacrylat, Methylacrylat, Butylacrylat oder Cyclohexylacrylat.

Die Anzahl der sich wiederholenden Struktureinheiten in den Copolymeren ist nicht eingeschränkt. Als besonders vorteilhaft hat es sich jedoch erwiesen, mittlere Molekulargewichte von 5.000 bis 100.000 g/Mol einzustellen.

Die Herstellung der erfindungsgemäßen Copolymere kann auf verschiedenen Wegen erfolgen. Wesentlich ist hierbei, dass man 10 bis 90 Mol-% eines ungesättigten Mono- oder Dicarbonsäure-Derivats, 1 bis 89 Mol-% eines Oxyalkylen-Alkenylethers sowie 0 bis 10 Mol-% einer vinylischen Polyalkylenglykol- oder Esterverbindung mit Hilfe eines radikalischen Starters polymerisiert.

Als ungesättigte Mono- oder Dicarbonsäure-Derivate, welche die Baugruppen der Formeln (la) bzw. (Ib) bilden, werden vorzugsweise eingesetzt: Acrylsäure, Methacrylsäure, Maleinsäure oder Fumarsäure.

Anstelle von Acrylsäure, Methacrylsäure, Maleinsäure oder Fumarsäure können auch deren ein- oder zweiwertige Metallsalze, vorzugsweise Natrium-, Kalium-, Calcium- oder Ammoniumsalze verwendet werden.

Als Acryl-, Methacryl-, Maleinsäure- oder Fumarsäure-Derivate werden vor allem deren Ester mit Polyalkylenglykol der allgemeinen Formel HO-(CₘH₂ₘO) ₙ-R² mit R² = H, aliphatischem Kohlenwasserstoffrest mit 1 bis 20 C-Atomen, cycloaliphatischem Kohlenwasserstoffrest mit 5 bis 8 C-Atomen, ggf. substituiertem Arylrest mit 6 bis 14 C-Atomen sowie m = 2 bis 4 und n = 0 bis 200 verwendet.

Die bevorzugten Substituenten am Arylrest sind -OH-, -COO^{⊖}- oder -SO₃^{⊖}-Gruppen.

Anstelle Maleinsäure kann auch dessen Anhydrid oder Imid verwendet werden. Die Derivate der Formeln (la) und (Ib) können auch als Mischung von Anhydrid oder Imid und freier Säure vorliegen und werden in einer Menge von vorzugsweise 40 bis 75 Mol-% verwendet.

Die zweite erfindungswesentliche Komponente zur Herstellung der erfindungsgemäßen Copolymeren stellt ein Oxyalkylenglykol-Alkenylether dar, der vorzugsweise in einer Menge von 20 bis 55 Mol-% eingesetzt wird. Bei den bevorzugten Oxyalkylenglykol-Alkenylethern entsprechend der Formel (V) 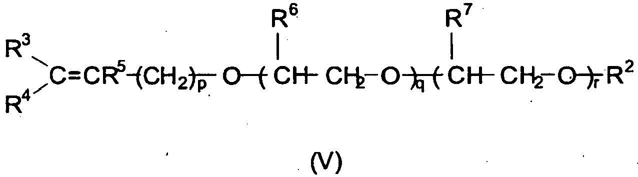 stellen R³ = H oder einen aliphatischen Kohlenwasserstoffrest mit 1 bis 6 C-Atomen dar, R⁴ einen aliphatischen Kohlenwasserstoffrest mit 1 bis 6 C-Atomen, einen cycloaliphatischen Kohlenwasserstoffrest mit 5 bis 8 C-Atomen sowie Phenyl, R⁵ = H, ein aliphatischer Kohlenwasserstoffrest mit 1 bis 5 C-Atomen, R⁶ und R⁷ = unabhängig voneinander H, ein aliphatischer Kohlenwasserstoffrest mit 1 bis 6 C-Atomen, p = 0 bis 3, q + r = 0 bis 500, während R² oben genannte Bedeutung besitzt. Als besonders vorteilhaft hat sich hierbei die Verwendung von Propenyloxypolyalkylenglykol-Derivaten erwiesen, die sich sehr einfach durch Umlagerung der entsprechenden Allylpolyether herstellen lassen.

Als dritte fakultative Komponente zur Einführung der Baugruppe c) werden vorzugsweise 1 bis 5 Mol-% einer vinylischen Polyalkylenglykol- oder Ester-Verbindung eingesetzt. Als bevorzugte vinylische Polyalkylenglykol-Verbindungen werden Derivate entsprechend der Formel (VI) verwendet, 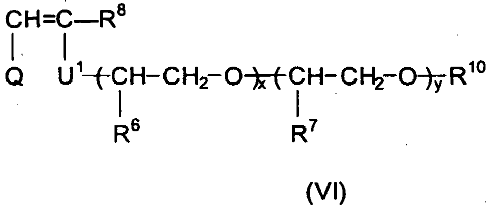 wobei Q vorzugsweise -H, oder COOMₐ, R⁸ = H, CH₃ und U¹ = -CO-NH-, -O- oder -CH₂O- sein können, d. h. es handelt sich um die Säureamid-, Vinyl- oder Allylether der entsprechenden Polyalkylenglykol-Derivate. Die Werte für x sind 1 bis 150 und für y = 0 bis 15. R¹⁰ kann entweder wiederum R² sein oder 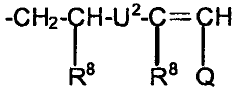 bedeuten, wobei U² = -NH-CO-, -O- sowie -OCH₂- und Q = COOMₐ und vorzugsweise -H ist.

Im Falle von R¹⁰ = R² und R² vorzugsweise H handelt es sich um die Polyalkylenglykol-Monamide bzw. Ether der entsprechenden Acryl- (Q = H, R⁸ = H), Methacryl- (Q = H, R⁸ = CH₃) oder Maleinsäure- (Q = COOMₐ, R⁸ = H)-Derivate. Beispiele für solche Monomere sind Maleinsäure-N-(methylpolypropylenglykol-)monoamid, Maleinsäure-N-(methoxy-polypropylenglykol-polyethylenglykol-) monoamid, Polypropylenglykolvinylether und Polypropylenglykol-allylether.

Im Falle von R¹⁰ ≠ R² handelt es sich um bifunktionelle Vinylverbindungen, deren Polyalkylenglykol-Derivate über Amid- oder Ethergruppen (-O- bzw. -OCH₂-) miteinander verbunden sind. Beispiele für solche Verbindungen sind Polypropylenglykol-bis-maleinamidsäure, Polypropylenglykoldiacrylamid, Polypropylenglykoldimethacrylamid, Polypropylenglykoldivinylether, Polypropylenglykoldiallylether.

Als vinylische Esterverbindung im Rahmen der vorliegenden Erfindung werden vorzugsweise Derivate entsprechend der Formel (VII) eingesetzt, 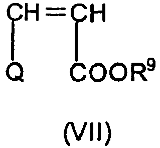 wobei Q = COOMₐ oder -COOR⁹ bedeuten und R⁹ ein aliphatischer Kohlenwasserstoffrest mit 3 bis 20 C-Atomen, ein cycloaliphatischer Kohlenwasserstoffrest mit 5 bis 8 C-Atomen sowie ein Arylrest mit 6 bis 14 C-Atomen sein kann; a und M besitzen die oben genannte Bedeutung. Beispiele für solche Esterverbindungen sind Di-n-butylmaleinat bzw. -fumarat oder Mono-n-butylmaleinat- bzw. -fumarat.

Des Weiteren können auch Verbindungen entsprechend der Formel (VIII) eingesetzt werden 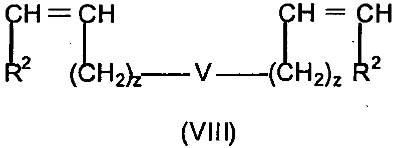 wobei z wiederum 0 bis 4 sein kann und R² die bereits bekannte Bedeutung besitzt. V bedeutet hierbei -O-CO-C₆H₄-CO-O-. Diese Verbindungen stellen bspw. Dialkenylphthalsäure-Derivate dar. Ein typisches Beispiel für solche Phthalsäure-Derivate ist Diallylphthalat.

Die Molekulargewichte der Verbindungen, welche die Baugruppe c) bilden, können in weiten Grenzen variiert werden und liegen vorzugsweise zwischen 150 und 10.000.

Erfindungsgemäß können nach einer bevorzugten Ausführungsform noch bis zu 50, vorzugsweise bis zu 20 Mol-%, auf die Summe der Baugruppen a) bis c) bezogen, weiterer Monomere wie oben beschrieben eingesetzt werden.

Die Copolymere entsprechend der vorliegenden Erfindung können nach den üblichen Methoden hergestellt werden. Ein besonderer Vorteil besteht darin, dass man erfindungsgemäß ohne Lösemittel oder aber in wässriger Lösung arbeiten kann. In beiden Fällen handelt es sich um drucklose und daher sicherheitstechnisch unbedenkliche Reaktionen.

Wird das Verfahren in wässriger Lösung durchgeführt, so erfolgt die Polymerisation bei 20 bis 100 °C mit Hilfe eines üblichen Radikalstarters, wobei die Konzentration der wässrigen Lösung vorzugsweise auf 30 bis 50 Gew.-% eingestellt wird. Gemäß einer bevorzugten Ausführungsform kann die radikalische Polymerisation hierbei im sauren pH-Bereich durchgeführt werden, insbesondere bei einem pH-Wert zwischen 4,0 und 6,5, wobei auf die herkömmlichen Initiatoren wie H₂O₂ zurückgegriffen werden kann, ohne dass es zu einer befürchteten Etherspaltung kommt, wodurch die Ausbeuten sehr stark beeinträchtigt würden.

Beim erfindungsgemäßen Verfahren wird vorzugsweise so gearbeitet, dass das ungesättigte Mono- oder Dicarbonsäure-Derivat, welches die Strukturgruppe a) bildet, in teilneutralisierter Form in wässriger Lösung, bevorzugt zusammen mit dem Polymerisationsinitiator vorgelegt wird und die übrigen Monomeren zudosiert werden, sobald die erforderliche Reaktionstemperatur in der Vorlage erreicht ist. Separat zugegeben werden die Polymerisations-Hilfsmittel, welche die Aktivierungsschwelle des vorzugsweise peroxidischen Initiators senken können, so dass die Copolymerisation bei relativ niedrigen Temperaturen ablaufen kann. Gemäß einer weiteren bevorzugten Ausführungsform kann das ungesättigte Mono- oder Dicarbonsäure-Derivat als auch der Radikalbildner in separaten oder gemeinsamen Zuläufen der Reaktorvorlage zudosiert werden, wodurch das Problem der Wärmeabführung in idealer Weise gelöst werden kann.

Es ist andererseits auch möglich, die die Strukturgruppe b) bildenden Polyoxyalkylenglykol-Alkenylether vorzulegen und das Mono- oder Dicarbonsäure-Derivat (Baugruppe a)) so zuzudosieren, dass eine gleichmäßige Verteilung der Monomereinheiten über die Polymerkette erreicht wird.

Die Art der verwendeten Polymerisationsinitiatoren, -aktivatoren und sonstigen Hilfsmittel, wie z. B. Molekulargewichtsregler, ist relativ unproblematisch, d. h. als Initiatoren kommen die üblichen Radikalspender zum Einsatz, wie Wasserstoffperoxid, Natrium-, Kalium- oder Ammoniumperoxodisulfat, tert. Butylhydroperoxid, Dibenzoylperoxid, Natriumperoxid, 2,2'-Azobis-(2-amidinopropan)-dihydrochlorid, Azobis-(isobutyronitril) usw.. Kommen Redoxsysteme zum Einsatz, so werden oben genannte Initiatoren mit reduzierend wirkenden Aktivatoren kombiniert. Beispiele für derartige Reduktionsmittel sind Fe(II)-salze, Natriumhydroxymethansulfinat-Dihydrat, Alkalimetallsulfite und -metabisulfite, Natriumhypophosphit, Hydroxylaminhydrochlorid, Thioharnstoff usw.

Ein besonderer Vorteil der erfindungsgemäßen Copolymere ist die Tatsache, dass sie auch ohne Lösemittel hergestellt werden können, was mit Hilfe der üblichen radikalischen Starter bei Temperaturen zwischen 20 und 150 °C erfolgen kann. Diese Variante kann aus wirtschaftlichen Gründen insbesondere dann angewendet werden, wenn die erfindungsgemäßen Copolymere in wasserfreier Form direkt ihrer erfindungsgemäßen Verwendung zugeführt werden sollen, weil dann eine aufwendige Abtrennung des Lösemittels, insbesondere des Wassers (bspw. durch Sprühtrocknung) entfallen kann.

Die erfindungsgemäßen Copolymere eignen sich hervorragend als Zusatzmittel für wässrige Suspensionen anorganischer und organischer Feststoffe auf der Basis von mineralischen oder bituminösen Bindemitteln wie Zement, Gips, Kalk, Anhydrit oder sonstigen Calciumsulfat-basierenden Baustoffen, oder auf Basis von pulverförmigen Dispersionsbindemitteln, wobei sie in einer Menge von 0,01 bis 10 Gew.-%, insbesondere 0,1 bis 5 Gew.-%, bezogen auf das Gewicht des mineralischen Bindemittels, eingesetzt werden.

Die nachfolgenden Beispiele sollen die Erfindung näher erläutern.

### Beispiele

### Herstellungsbeispiele

### Beispiel 1

In einem 5 l Doppelwandreaktionsgefäß mit Thermometer, Rührer, Rückflußkühler und zwei Eingängen für separate Zuläufe wurden 500,0 g (1,00 Mol) Propenyloxypolyethylenglykol der allgemeinen Formel (II) (mittleres Molekulargewicht 500 g/Mol) vorgelegt.
Es wurden 2,28 g (0,01 Mol) Dibutylmaleinat eingerührt und anschließend 500 g Leitungswasser zugesetzt, wobei eine stark alkalische wässrige Lösung des Vinylethers erhalten wurde.
Nacheinander wurden 350 mg FeSO₄ 7H₂O, 1,99 g 3-Mercaptopropionsäure und 13,00 g 50 %iges wässriges Wasserstoffperoxid zugesetzt. Bei Raumtemperatur wurden anschließend 100,87 g (1,40 Mol) Acrylsäure und 208,22 g (1,6 mol) Hydroxypropylacrylat (HPA) gelöst in 350 g Leitungswasser, enthaltend eine zusätzliche Reglermenge von 6,21 g 3-Mercaptopropionsäure, über einen Zeitraum von 75 Minuten dem Vorlagegemisch zugesetzt. Separat hierzu erfolgte die Dosierung von 85 ml einer 2 %igen wässrigen Lösung von Brüggolit™ über einen Zeitraum von 100 Minuten, wobei die Temperatur auf maximal 36,5 °C anstieg.
Nach beendeter Zugabe wurde noch 10 Minuten gerührt und durch Zugabe von wässriger Natronlauge ein pH Wert von 6,50 eingestellt. Das gewichtsmittlere Molekulargewicht des Copolymerisates betrug 18.800 g/Mol.

### Beispiel 2

In einem 5 l Doppelwandreaktionsgefäß mit Thermometer, Rührer, Rückflußkühler und zwei Eingängen für separate Zuläufe wurden 500,0 g (1,00 Mol) Propenyloxypolyethylenglykol 500 der allgemeinen Formel (II) (mittleres Molekulargewicht 500 g/Mol) vorgelegt.
Es wurden 2,28 g (0,01 mol) Dibutylmaleinat eingerührt und anschließend 500 g Leitungswasser zugesetzt, wobei eine stark alkalische wässrige Lösung des Vinylethers erhalten wurde.
Unter Rühren und Kühlen wurden 29,40 g (0,30 Mol) Maleinsäureanhydrid gelöst in 68,6 g Wasser (entsprechend einer 30 %igen Lösung) sowie separat 5,43 g 20%ige wässrige Natronlauge zugesetzt, wobei die Temperatur unter 30 °C gehalten wurde. Nacheinander wurden 310 mg FeSO₄ 7H₂O, 1,54 g 3-Mercaptopropionsäure- und 11,00 g 50 %iges wässriges Wasserstoffperoxid zugesetzt. Bei Raumtemperatur wurden anschließend 100,87 g (1,40 Mol) Acrylsäure gelöst in 150 g Leitungswasser, enthaltend eine zusätzliche Reglermenge von 5,30 g 3-Mercaptopropionsäure, über einen Zeitraum von 75 Minuten dem Vorlagegemisch zugesetzt. Separat hierzu erfolgte die Dosierung von 72 ml einer 2 %igen wässrigen Lösung von Brüggolit™ über einen Zeitraum von 100 Minuten, wobei die Temperatur auf maximal 34,9 °C anstieg.
Nach beendeter Zugabe wurde noch 10 Minuten gerührt und durch Zugabe von wässriger Natronlauge ein pH-Wert von 6,50 eingestellt. Das gewichtsmittlere Molekulargewicht des Copolymerisates betrug 20.100 g/Mol.

### Beispiel 3

In einem 5 l Doppelwandreaktionsgefäß mit Thermometer, Rührer, Rückflußkühler und zwei Eingängen für separate Zuläufe wurden 1.100 g (1,00 Mol) Propenyloxypolyethylenglykol 1.100 der allgemeinen Formel (II) (mittleres Molekulargewicht 1.100 g/Mol) als Schmelze bei 70 °C vorgelegt. Es wurden 1.100 g Leitungswasser zugesetzt, wobei eine stark alkalische wässrige Lösung des Vinylethers erhalten wurde. Unter Rühren und Kühlen wurden 19,60 g (0,20 Mol) Maleinsäureanhydrid gelöst in 45,0 g Wasser (entsprechend einer 30 %igen Lösung) sowie separat 3,62 g 20%ige wässrige Natronlauge zugesetzt, wobei die Temperatur unter 30 °C gehalten wurde. Anschließend wurden 36,00 g (0,02 Mol) eines Umsetzungsproduktes aus einem butanolgestarteten monofunktionellen NH₂-terminierten Ethylenoxid/Propylenoxid-Blockpolymerisat (EO 4, PO 27; Molekulargewicht 1.800 g/Mol) mit Maleinsäureanhydrid unter kurzzeitigem intensiven Rühren zugesetzt und nacheinander 310 mg FeSO₄ 7H₂O, 1,60 g 3-Mercaptopropionsäure und 11,50 g 50 %iges wässriges Wasserstoffperoxid zugesetzt. Bei Raumtemperatur wurden anschließend 93,67 g (1,30 Mol) Acrylsäure gelöst in 281 g Leitungswasser enthaltend eine zusätzliche Reglermenge von 5,0 g 3-Mercaptopropionsäure über einen Zeitraum von 75 Minuten dem Vorlagegemisch zugesetzt. Separat hierzu erfolgte die Dosierung von 72 ml einer 2 %igen wässrigen Lösung von Brüggolit™ über einen Zeitraum von 97 Minuten, wobei die Temperatur auf maximal 32,8 °C anstieg.
Nach beendeter Zugabe wurde noch 15 Minuten gerührt und durch Zugabe wässriger Natronlauge ein pH-Wert von 6,50 eingestellt. Das gewichtsmittlere Molekulargewicht des Copolymerisates betrug 30.300 g/Mol.

### Beispiel 4

In einem 5 l Doppelwandreaktionsgefäß mit Thermometer, Rührer, Rückflußkühler und zwei Eingängen für separate Zuläufe wurden 2.000,0 g (1,00 Mol) Propenyloxypolyethylenglykol 2.000 der allgemeinen Formel (II) (mittleres Molekulargewicht 2.000 g/Mol) als Schmelze bei 50 °C vorgelegt. Es wurden 4,56 g (0,02 mol) Dibutylmaleinat in die Schmelze eingerührt und anschließend 2.000 g Leitungswasser zugesetzt, wobei eine stark alkalische wässrige Lösung des Vinylethers erhalten wurde.
Nacheinander wurden 310 mg FeSO₄ 7H₂O, 1,99 g 3-Mercaptopropionsäure und 12,00 g 50 %iges wässriges Wasserstoffperoxid zugesetzt. Bei Raumtemperatur wurden anschließend 144,12 g (2,00 Mol) Acrylsäure mit 350 g Leitungswasser vermischt, wobei eine zusätzliche Reglermenge von 4,31 g 3-Mercaptopropionsäure enthalten ist. Diese wird über einen Zeitraum von 85 Minuten dem Vorlagegemisch zugesetzt. Separat hierzu erfolgte die Dosierung von 78 ml einer 2 %igen wässrigen Lösung von Brüggolit™ über einen Zeitraum von 97 Minuten, wobei die Temperatur auf maximal 31,1 °C anstieg.
Nach beendeter Zugabe wurde noch 10 Minuten gerührt und durch Zugabe von wässriger Natronlauge ein pH-Wert von 6,50 eingestellt. Das gewichtsmittlere Molekulargewicht des Copolymerisates betrug 33.300 g/Mol.

### Beispiel 5

In einem 5 I Doppelwandreaktionsgefäß mit Thermometer, Rührer, Rückflußkühler und zwei Eingängen für separate Zuläufe wurden 2.000 g (1,00 Mol) Propenyloxypolyethylenglykol 2.000 der allgemeinen Formel (II) (mittleres Molekulargewicht 2.000 g/Mol) als Schmelze bei 85 °C vorgelegt.
Anschließend wurden 2.000 g Leitungswasser zugesetzt, wobei eine stark alkalische wässrige Lösung des Vinylethers erhalten wurde. Unter Rühren und Kühlen wurden 58,80 g (0,60 Mol) Maleinsäureanhydrid gelöst in 137,2 g Wasser (entsprechend einer 30 %igen Lösung) sowie separat 10,86 g 20%ige wässrige Natronlauge zugesetzt, wobei die Temperatur unter 30 °C gehalten wurde.
Anschließend wurden 36,00 g (0,02 Mol) eines Umsetzungsproduktes aus einem butanolgestarteten monofunktionellen NH₂-terminierten Ethylenoxid/Propylenoxid-Blockpolymerisat (EO 4, PO 27; Molekulargewicht 1.800 g) mit Maleinsäureanhydrid unter kurzzeitigem intensiven Rühren zugesetzt. Nacheinander werden 380 mg FeSO₄ 7H₂O, 2,33 g 3-Mercaptopropionsäure und 13,50 g 50 %iges wässriges Wasserstoffperoxid zugesetzt. Bei Raumtemperatur wurden anschließend 128,27 g (1,78 Mol) Acrylsäure gelöst in 350 g Leitungswasser, enthaltend eine zusätzliche Reglermenge von 6,31 g 3-Mercaptopropionsäure, über einen Zeitraum von 85 Minuten dem Vorlagegemisch zugesetzt. Separat hierzu erfolgte die Dosierung von 91 ml einer 2 %igen wässrigen Lösung von Brüggolit™ über einen Zeitraum von 97 Minuten, wobei die Temperatur auf maximal 30,9 °C anstieg.
Nach beendeter Zugabe wurde noch 10 Minuten gerührt und durch Zugabe von wässriger Natronlauge ein pH-Wert von 6,50 eingestellt. Das gewichtsmittlere Molekulargewicht des Copolymerisates betrug 31.200 g/Mol.

### Vergleichsbeispiele

### Vergleichsbeispiel 1

Es wurde wie unter Beispiel 1 beschrieben verfahren, jedoch wurde anstelle des dort verwendeten Propenyloxypolyethylenglykol der allgemeinen Formel (II) ein Vinyloxybutyl-poly(ethylenglykol) mit dem mittleren Molekulargewicht 500 g/Mol verwendet. Ansonsten wurden die gleichen Einsatzmengen wie im Beispiel 1 verwendet.

### Vergleichsbeispiel 2

Es wurde wie unter Beispiel 5 beschrieben verfahren, jedoch wurde anstelle des dort verwendeten Propenyloxypolyethylenglykols (MW = 2.000) der allgemeinen Formel (II) ein Vinyloxybutyl-poly(ethylenglykol) mit dem mittleren Molekulargewicht 2.000 g/Mol verwendet.

**Tabelle 1**

| Molare Zusammensetzung der Copolymere entsprechend den Beispielen (Monomer in Mol-%) | | | | | | | | | | | |
|---|---|---|---|---|---|---|---|---|---|---|---|
| Polymer | Vinyloxybutylpoly(ethyleneglykol) (500 g/mol) | Vinyloxybutylpoly(ethyleneglykol) (2.000 g/mol) | 1-Propenyloxypolyethyleneglykol (500 g/mol) | 1-Propenyloxypolyethyleneglykol (1.100g/mol ) | 1-Propenyloxypolyethyleneglykol (2.000g/mol ) | Acry lsäure | Maleinsäureanhydrid | Hydroxypropylacrylat (HPA) | Dibutylmaleinat | Poly(POblock-EO)maleinamidsäure (1.900g/mol ) | Mw (1.000g/mol) |
| Vergleichsbeispiel 1 (VP 1828) | 24,94 | - | - | - | - | 34,91 | - | 39,90 | 0,25 | - | 18 |
| Vergleichsbeispiel 2 | - | 29,41 | | | | 52,36 | 17,64 | - | - | 0,59 | 33 |
| Melment L 10 | - | - | - | - | - | - | - | - | - | - | - |
| Beispiel 1 | - | - | 24,94 | - | - | 34,91 | - | 39,90 | 0,25 | - | 19 |
| Beispiel 2 | - | - | 36,90 | - | - | 51,66 | 11,07 | - | 0,37 | - | 20 |
| Beispiel 3 | - | - | - | 39,68 | - | 51,59 | 7,94 | - | - | 0,79 | 30 |
| Beispiel 4 | - | - | | - | 33,11 | 66,23 | - | - | 0,66 | - | 33 |
| Beispiel 5 | - | - | - | | 29,41 | 52,35 | 17,65 | - | - | 0,59 | 31 |

### Anwendungsbeispiele

### Anwendungsbeispiel 1

### (Transportbeton)

Normgemäß wurden in einem Betonzwangsmischer 4,5 kg Portlandzement (CEM I 42,5 R Bernburg) mit 33 kg Zuschlägen (Sieblinie 0 bis 32 mm) und 2,7 kg Wasser einschließlich des Wassers aus dem Zusatzmittel vermischt. Die wässrigen Lösungen der Zusatzmittel wurden zugesetzt und 10 Minuten bzw. 40 Minuten nach Testbeginn erfolgte die Bestimmung des Ausbreitmaßes nach DIN EN 12350-5.
Prüfkörper der Kantenlänge 15 x 15 x 15 cm wurden anschließend hergestellt und die Druckfestigkeit nach 24 Stunden sowie der Luftporenanteil (über Raumgewicht der erhärteten Probe) ermittelt.

**Tabelle 2**

| Transportbetonergebnisse (W/Z = 0,6) | | | | | | |
|---|---|---|---|---|---|---|
| **Polymer** | **Feststoff (% w/w)** | **Dosierung (% w/w)** | **Ausbreitmaß (cm)** | | **Luftgehalt (% v/v)** | **24 h Druckfestigkeit (MPa)** |
| | | | **10 min** | **40 min** | | |
| Vergleich 1 (=VP 1828) | 39,7 | 0,25 | 55,0 | 54,0 | 2,3 | 13,9 |
| Vergleich 2 | 40,0 | 0,25 | 62,0 | 58,0 | 2,5 | 15,0 |
| Melment L 10 | 40,3 | 0,55 | 55,5 | 40,5 | 1,5 | 14,8 |
| Bsp.1 | 42,9 | 0,25 | 58,0 | 57,5 | 2,3 | 14,2 |
| Bsp.2 | 41,2 | 0,25 | 60,5 | 58,5 | 2,3 | 15,9 |
| Bsp.3 | 39,9 | 0,25 | 60,0 | 59,0 | 2,4 | 14,9 |
| Bsp.4 | 43,0 | 0,25 | 61,5 | 59,5 | 2,6 | 15,5 |
| Bsp.5 | 44,6 | 0,25 | 65,0 | 60,5 | 2,3 | 16,5 |

### Anwendungsbeispiel 2

### (Fertigteilbeton)

Fertigteilrezeptur wie oben beschrieben, jedoch 5,75 kg Portlandzement CEM I 52,5 R Bernburg, 2,3 kg Wasser und 33 kg Zuschlag.

**Tabelle 3**

| Fertigteilbetonergebnisse (W/Z = 0,4) | | | | | | |
|---|---|---|---|---|---|---|
| **Polymer** | **Feststoff (% w/w)** | **Dosierung (% w/w)** | **Ausbreitmaß (cm)** | | **Luftgehalt (% v/v)** | **24 h Druckfestigkeit (MPa)** |
| | | | **10 min** | **40 min** | | |
| Vergleich 1 (= VP 1828) | 39,7 | 0,3 | 53,0 | 51,0 | 1,6 | 38,8 |
| Vergleich 2 | 40,0 | 0,25 | 57,5 | 54,0 | 1,4 | 41,1 |
| Melment L 10 | 40,3 | 0,9 | 38,0 | - | 1,5 | 37,9 |
| Bsp.1 | 42,9 | 0,3 | 55,5 | 54,5 | 1,6 | 39,2 |
| Bsp.2 | 41,2 | 0,3 | 58,0 | 56,5 | 1,5 | 39,9 |
| Bsp.3 | 39,9 | 0,3 | 58,5 | 56,5 | 1,5 | 40,2 |
| Bsp.4 | 43,0 | 0,3 | 60,5 | 58,5 | 1,6 | 41,1 |
| Bsp.5 | 44,6 | 0,25 | 61,5 | 59,5 | 1,5 | 42,5 |

## Patentansprüche

1. Copolymere, umfassend
a) 10 bis 90 Mol-% der Baugruppen der Formeln (la) und/oder (Ib) 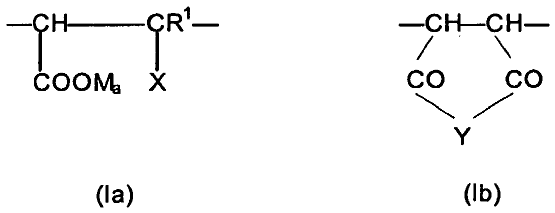 wobei
R¹ = Wasserstoff oder ein aliphatischer Kohlenwasserstoffrest mit 1 bis 20 C-Atomen
X = H, -COOMₐ, -CO-O(CₘH₂ₘO)ₙ-R², -CO-NH-(CₘH₂ₘO)ₙ-R²
M = Wasserstoff, ein ein- oder zweiwertiges Metallkation, Ammoniumion, ein organischer Aminrest
a = ½ oder 1
R² = Wasserstoff, ein aliphatischer Kohlenwasserstoffrest mit 1 bis 20 C-Atomen, ein cycloaliphatischer Kohlenwasserstoffrest mit 5 bis 8 C-Atomen, ein ggf. substituierter Arylrest mit 6 bis 14 C-Atomen
Y = O, NR²
m = 2 bis 4 und
n = 0 bis 200
bedeuten,
b) 1 bis 89 Mol% Baugruppen der allgemeinen Formel (II) 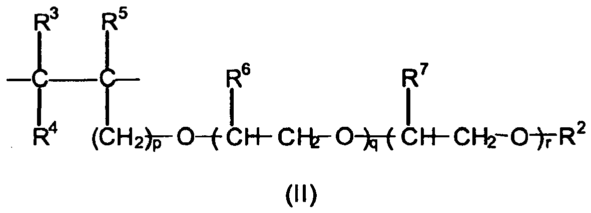 wobei
R³ = H, ein aliphatischer Kohlenwasserstoffrest mit 1 bis 6 C-Atomen
R⁴ = ein aliphatischer Kohlenwasserstoffrest mit 1 bis 6 C-Atomen, ein cycloaliphatischer Kohlenwasserstoffrest mit 5 bis 8 C-Atomen sowie Phenyl
R⁵ = H, ein aliphatischer Kohlenwasserstoffrest mit 1 bis 5 C-Atomen
R⁶, R⁷ = unabhängig voneinander H, ein aliphatischer Kohlenwasserstoffrest mit 1 bis 6 C-Atomen
p = 0 bis 3
q + r = 0 bis 500
darstellen und
R² oben genannte Bedeutung besitzt
c) 0 bis 10 Mol-% Baugruppen der Formeln (IIIa) und/oder (IIIb) 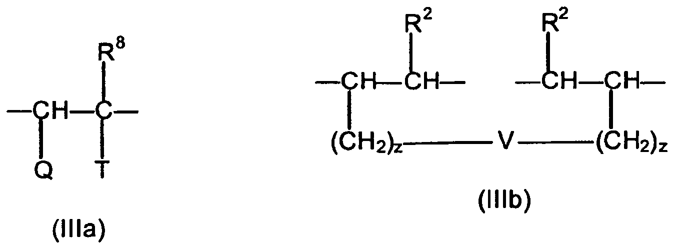 wobei
Q = -H, COOMₐ, -COOR⁹
T = 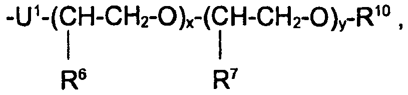 -(CH₂)_{z}-V-(CH₂)_{z}-CH=CH-R², -COOR⁹ im Falle von Q = -COOR⁹ oder COOMₐ
U¹ = -CO-NH-, -O-, -CH₂O-
U² = -NH-CO-, -O-, -OCH₂-
V = -O-CO-C₆H₄-CO-O-
R⁸ = H, CH₃
R⁹ = aliphatischer Kohlenwasserstoffrest mit 3 bis 20 C-Atomen, cycloaliphatischer Kohlenwasserstoffrest mit 5 bis 8 C-Atomen, Arylrest mit 6 bis 14 C-Atomen
R¹⁰ = 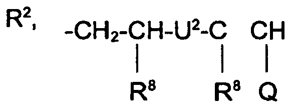
z = 0 bis 4
x = 1 bis 150
y = 0 bis 15 sowie
R², R⁶ und R⁷ oben genannte Bedeutung besitzen.

2. Copolymere nach Anspruch 1, **dadurch gekennzeichnet, dass** sie zusätzlich
d) 0-50 Mol-% der Baugruppen (IV), deren Monomere ein Vinyl- oder (Meth)-Acrylsäure-Derivat darstellen,
enthalten.

3. Copolymere, bestehend aus
a) 10 bis 90 Mol-% der Baugruppen der Formeln (la) und/oder (Ib) 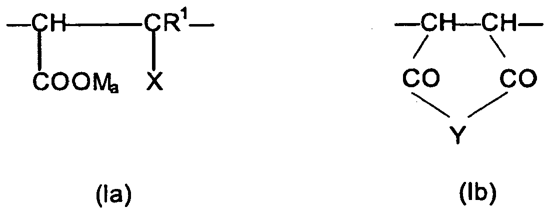 wobei
R¹ = Wasserstoff oder ein aliphatischer Kohlenwasserstoffrest mit 1 bis 20 C-Atomen
X = H, -COOMₐ, -CO-O(CₘH₂ₘO)ₙ-R², -CO-NH-(CₘH₂ₘO)ₙ-R²
M = Wasserstoff, ein ein- oder zweiwertiges Metallkation, Ammoniumion, ein organischer Aminrest
a = ½ oder 1
R² = Wasserstoff, ein aliphatischer Kohlenwasserstoffrest mit 1 bis 20 C-Atomen, ein cycloaliphatischer Kohlenwasserstoffrest mit 5 bis 8 C-Atomen, ein ggf. substituierter Arylrest mit 6 bis 14 C-Atomen
Y = O, NR²
m = 2 bis 4 und
n = 0 bis 200
bedeuten,
b) 1 bis 89 Mol-% Baugruppen der allgemeinen Formel (II) 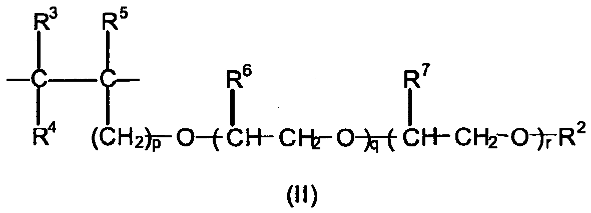 wobei
R³ = H, ein aliphatischer Kohlenwasserstoffrest mit 1 bis 6 C-Atomen
R⁴ = ein aliphatischer Kohlenwasserstoffrest mit 1 bis 6 C-Atomen, ein cycloaliphatischer Kohlenwasserstoffrest mit 5 bis 8 C-Atomen sowie Phenyl
R⁵ = H, ein aliphatischer Kohlenwasserstoffrest mit 1 bis 5 C-Atomen
R⁶, R⁷ = unabhängig voneinander H, ein aliphatischer Kohlenwasserstoffrest mit 1 bis 6 C-Atomen
p = 0 bis 3
q+r = 0 bis 500
darstellen und
R² oben genannte Bedeutung besitzt
c) 0 bis 10 Mol-% Baugruppen der Formeln (IIIa) und/oder (IIIb) 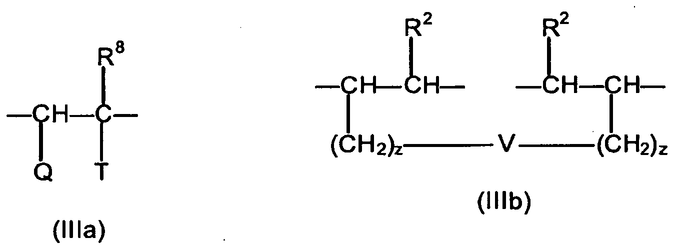 wobei
Q =-H, -COOMₐ, -COOR⁹
T = 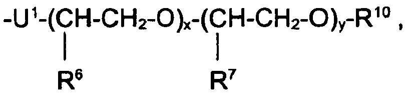 -(CH₂)_{z}-V-(CH₂)_{z}-CH=CH-R², -COOR⁹ im Falle von Q = -COOR⁹ oder COOMₐ
U¹ = -CO-NH-, -O-, -CH₂O-
U² = -NH-CO-, -O-, -OCH₂-
V = -O-CO-C₆H₄-CO-O-
R⁸ = H, CH₃
R⁹ = aliphatischer Kohlenwasserstoffrest mit 3 bis 20 C-Atomen, cycloaliphatischer Kohlenwasserstoffrest mit 5 bis 8 C-Atomen, Arylrest mit 6 bis 14 C-Atomen
R¹⁰ = 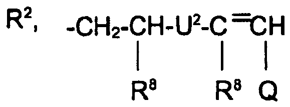
z = 0 bis 4
x = 1 bis 150
y = 0 bis 15 sowie
R², R⁶ und R⁷ oben genannte Bedeutung besitzen, und
d) 0-50 Mol% der Baugruppen (IV), deren Monomere ein Vinyl- oder (Meth-)Acrylsäure-Derivat darstellen.

4. Copolymere nach Anspruch 1-3, **dadurch gekennzeichnet, dass** R¹ Wasserstoff oder einen Methylrest darstellt.

5. Copolymere nach den Ansprüchen 1 und 4, **dadurch gekennzeichnet, dass** M ein ein- oder zweiwertiges Metallkation ausgewählt aus der Gruppe Natrium-, Kalium-, Calcium- oder Magnesiumionen bedeutet.

6. Copolymere nach den Ansprüchen 1 bis 5, **dadurch gekennzeichnet, dass** im Falle von R² = Phenyl der Phenylrest noch durch Hydroxyl-, Carboxyl- oder Sulfonsäure-Gruppen substituiert ist.

7. Copolymere nach den Ansprüchen 1 bis 6, **dadurch gekennzeichnet, dass** in der Formel (II) p = 0 bedeutet.

8. Copolymere nach den Ansprüchen 1 bis 7, **dadurch gekennzeichnet, dass** sie 40 bis 75 Mol% Baugruppen der Formeln (la) und/oder (Ib), 20 bis 55 Mol-% Baugruppen der Formel (II), 1 bis 5 Mol% Baugruppen der Formeln (IIIa) und/oder (IIIb) enthalten.

9. Copolymere nach den Ansprüchen 2 bis 8, **dadurch gekennzeichnet, dass** sie zusätzlich bis zu 50 Mol-%, insbesondere bis zu 20 Mol-%, bezogen auf die Summe der Baugruppen der Formeln (I), (II) und (III) Baugruppen (IV) enthalten, deren Monomere ein Vinyl- oder (Meth-) Acrylsäure-Derivat darstellt, insbesondere Styrol, α-Methylstyrol, Vinylacetat, Vinylpropionat, Ethylen, Propylen, Isobuten, N-Vinylpyrrolidon, Allylsulfonsäure, Methallylsulfonsäure, Vinylsulfonsäure, Vinylphosphonsäure, Hydroxyalkyl(meth)acrylate, Acrylamid, Methacrylamid, AMPS, Methylmethacrylat, Methylacrylat, Butylacrylat oder Cyclohexylacrylat.

10. Copolymere nach den Ansprüchen 1 bis 9, **dadurch gekennzeichnet, dass** sie ein mittleres Molekulargewicht von 5.000 bis 100.000 g/mol aufweisen.

11. Verfahren zur Herstellung der Copolymeren nach den Ansprüchen 1 bis 10, **dadurch gekennzeichnet, dass** man 10 bis 90 Mol-% eines ungesättigten Mono- oder Dicarbonsäure-Derivats, 1 bis 89 Mol-% eines Oxyalkylenglykol-Alkenylethers, 0 bis 10 Mol-% einer vinylischen Polyalkylenglykol- oder EsterVerbindung mit Hilfe eines radikalischen Starters und gegebenenfalls noch zusätzlich bis zu 50 Mol-%, insbesondere bis zu 20 Mol% bezogen auf die Monomeren mit den Baugruppen gemäß den Formeln (I), (II), (III) und (IV) eines Vinyl- oder (Meth-)Acrylsäure-Derivats copolymerisiert.

12. Verfahren nach Anspruch 11, **dadurch gekennzeichnet, dass** man die Polymerisation in wässriger Lösung bei einer Temperatur von 20 bis 100 °C durchführt.

13. Verfahren nach Anspruch 12, **dadurch gekennzeichnet, dass** die Konzentration der wässrigen Lösung 30 bis 50 Gew.-% beträgt.

14. Verwendung der Copolymeren nach den Ansprüchen 1 bis 10 als Zusatzmittel für wässrige Suspensionen auf Basis von mineralischen oder bituminösen Bindemitteln, insbesondere Zement, Gips, Kalk, Anhydrit, oder sonstige Calciumsulfat basierende Bindemittel sowie auf Basis von pulverförmigen Dispersionsbindemitteln.

15. Verwendung der Copolymeren nach Anspruch 14, **dadurch gekennzeichnet, dass** sie in einer Menge von 0,01 bis 10 Gew.-%, vorzugsweise 0,1 bis 5 Gew.-%, bezogen auf das Gewicht des mineralischen Bindemittels eingesetzt werden.

## Claims

1. Copolymers comprising
a) 10 to 90 mol% of the structural groups of the formulae (Ia) and/or (Ib) 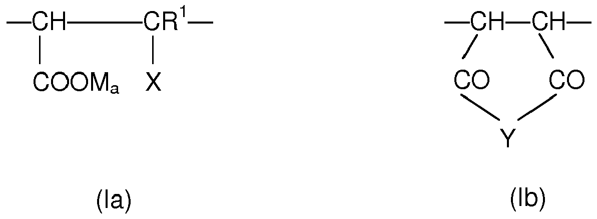 where
R¹ = hydrogen or an aliphatic hydrocarbon radical having 1 to 20 C atoms
X = H, -COOMₐ, -CO-O (CₘH₂ₘO)ₙ-R², -CO-NH-(CₘH₂ₘO)ₙ-R²
M = hydrogen, a mono- or divalent metal cation, ammonium ion, an organic amine radical
a = ½ or 1
R² = hydrogen, an aliphatic hydrocarbon radical having 1 to 20 C atoms, a cycloaliphatic hydrocarbon radical having 5 to 8 C atoms, an optionally substituted aryl radical having 6 to 14 C atoms
Y = 0, NR²
m = 2 to 4 and
n = 0 to 200,
b) 1 to 89 mol% of structural groups of the general formula (II) 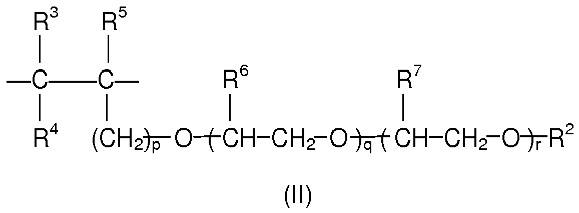 where
R³ = H, an aliphatic hydrocarbon radical having 1 to 6 C atoms
R⁴ = an aliphatic hydrocarbon radical having 1 to 6 C atoms, a cycloaliphatic hydrocarbon radical having 5 to 8 C atoms and phenyl
R⁵ = H, an aliphatic hydrocarbon radical having 1 to 5 C atoms
R⁶, R⁷ = independently of one another, H, an aliphatic hydrocarbon radical having 1 to 6 C atoms
p = 0 to 3
q + r = 0 to 500
and
R² has the abovementioned meaning
c) 0 to 10 mol% of structural groups of the formulae (IIIa) and/or (IIIb) 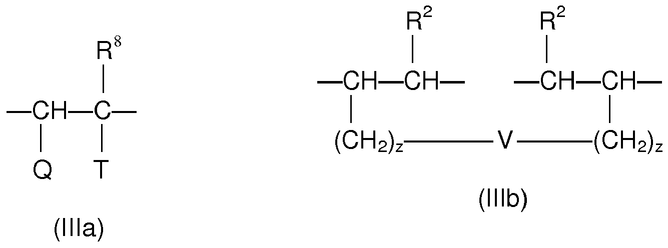 where
Q = -H, -COOMₐ, -COOR⁹ T = 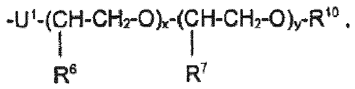 (CH₂)_{z}-V-(CH₂)_{z}-CH=CH-R², -COOR⁹ if Q = -COOR⁹ or COOMₐ
U¹ = -CO-NH-, -0-, -CH₂O-
U² = -NH-CO-, -0-, -OCH₂-
V = -O-CO-C₆H₄-CO-O-
R⁸ = H, CH₃
R⁹ = an aliphatic hydrocarbon radical having 3 to 20 C atoms, a cycloaliphatic hydrocarbon radical having 5 to 8 C atoms, an aryl radical having 6 to 14 C atoms
R¹⁰ = 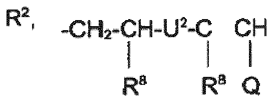
z = 0 to 4
x = 1 to 150
y = 0 to 15, and
R², R⁶ and R⁷ have the abovementioned meaning.

2. Copolymers according to Claim 1, **characterized in that** they additionally contain
d) 0-50 mol% of the structural groups (IV) whose monomers are a vinyl or (meth)acrylic acid derivative.

3. Copolymers consisting of
a) 10 to 90 mol% of the structural groups of the formulae (Ia) and/or (Ib) 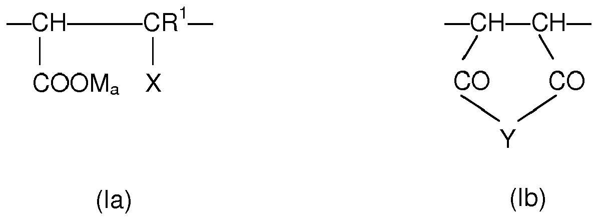 where
R¹ = hydrogen or an aliphatic hydrocarbon radical having 1 to 20 C atoms
X = H, -COOMₐ, -CO-O (CₘH₂ₘO)ₙ-R², -CO-NH-(CₘH₂ₘO)ₙ-R²
M = hydrogen, a mono- or divalent metal cation, ammonium ion, an organic amine radical
a = ½ or 1
R² = hydrogen, an aliphatic hydrocarbon radical having 1 to 20 C atoms, a cycloaliphatic hydrocarbon radical having 5 to 8 C atoms, an optionally substituted aryl radical having 6 to 14 C atoms
Y = 0, NR²
m = 2 to 4 and
n = 0 to 200,
b) 1 to 89 mol% of structural groups of the general formula (II) 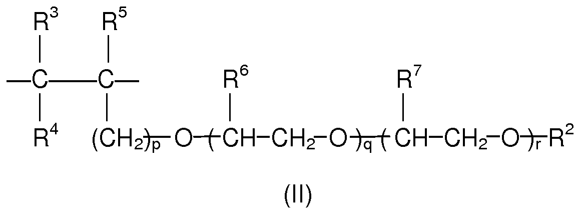 where
R³ = H, an aliphatic hydrocarbon radical having 1 to 6 C atoms
R⁴ = an aliphatic hydrocarbon radical having 1 to 6 C atoms, a cycloaliphatic hydrocarbon radical having 5 to 8 C atoms and phenyl
R⁵ = H, an aliphatic hydrocarbon radical having 1 to 5 C atoms
R⁶, R⁷ = independently of one another, H, an aliphatic hydrocarbon radical having 1 to 6 C atoms
p = 0 to 3
q + r = 0 to 500
and
R² has the abovementioned meaning
c) 0 to 10 mol% of structural groups of the formulae (IIIa) and/or (IIIb) 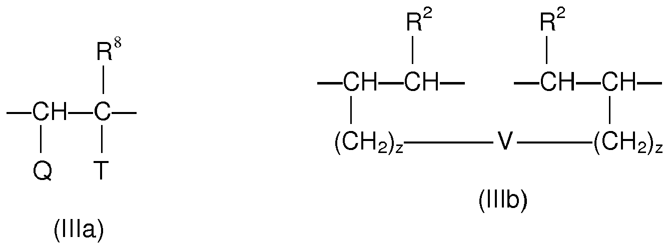 where
Q = -H, -COOMₐ, -COOR⁹
T = 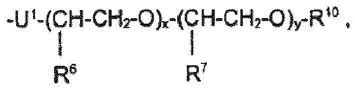 - (CH₂)_{z}-V-(CH₂)_{z}-CH=CH-R², -COOR⁹ if Q = -COOR⁹ or COOMₐ
U¹ = -CO-NH-, -0-, -CH₂O-
U² = -NH-CO-, -0-, -OCH₂-
V = -O-CO-C₆H₄-CO-O-
R⁸ = H, CH₃
R⁹ = an aliphatic hydrocarbon radical having 3 to 20 C atoms, a cycloaliphatic hydrocarbon radical having 5 to 8 C atoms, an aryl radical having 6 to 14 C atoms
R¹⁰ = 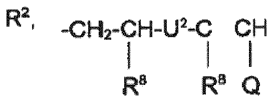
z = 0 to 4
x = 1 to 150
y = 0 to 15, and
R², R⁶ and R⁷ have the abovementioned meaning, and
d) 0-50 mol% of the structural groups (IV) whose monomers are a vinyl or (meth)acrylic acid derivative.

4. Copolymers according to Claims 1-3, **characterized in that** R¹ is hydrogen or a methyl radical.

5. Copolymers according to Claims 1 and 4, **characterized in that** M is a mono- or divalent metal cation selected from the group consisting of sodium, potassium, calcium or magnesium ions.

6. Copolymers according to Claims 1 to 5, **characterized in that** if R² = phenyl the phenyl radical is additionally substituted by hydroxyl, carboxyl or sulphonic acid groups.

7. Copolymers according to Claims 1 to 6, **characterized in that** in the formula (II) p = 0.

8. Copolymers according to Claims 1 to 7, **characterized in that** they contain 40 to 75 mol% of structural groups of the formulae (Ia) and/or (Ib), 20 to 55 mol% of structural groups of the formula (II), 1 to 5 mol% of structural groups of the formulae (IIIa) and/or (IIIb).

9. Copolymers according to Claims 2 to 8, **characterized in that** they additionally contain up to 50 mol%, in particular up to 20 mol%, based on the sum of the structural groups of the formulae (I), (II) and (III), of structural groups (IV) whose monomers are a vinyl or (meth)acrylic acid derivative, in particular styrene, α-methylstyrene, vinyl acetate, vinyl propionate, ethylene, propylene, isobutene, N-vinylpyrrolidone, allylsulphonic acid, methallylsulphonic acid, vinylsulphonic acid or vinylphosphonic acid, hydroxyalkyl (meth)acrylate, acrylamide, methacrylamide, AMPS, methyl methacrylate, methyl acrylate, butyl acrylate or cyclohexyl acrylate.

10. Copolymers according to Claims 1 to 9, **characterized in that** they have an average molecular weight of 5000 to 100 000 g/mol.

11. Process for the preparation of the copolymers according to Claims 1 to 10, **characterized in that** 10 to 90 mol% of an unsaturated mono- or dicarboxylic acid derivative, 1 to 89 mol% of an oxyalkylene glycol alkenyl ether, 0 to 10 mol% of a vinylic polyalkylene glycol or ester compound are copolymerized with the aid of a free-radical starter and optionally additionally up to 50 mol%, in particular up to 20 mol%, based on the monomers having the structural groups as in the formulae (I), (II), (III) and (IV), of a vinyl or (meth)acrylic acid derivative.

12. Process according to Claim 11, **characterized in that** the polymerization is carried out in aqueous solution at a temperature of 20 to 100°C.

13. Process according to Claim 12, **characterized in that** the concentration of the aqueous solution is 30 to 50% by weight.

14. Use of the copolymers according to Claims 1 to 10 as an additive for aqueous suspensions based on mineral or bituminous binders, in particular cement, gypsum, lime, anhydrite, or other calcium sulphate-based binders and based on pulverulent dispersion binders.

15. Use of the copolymers according to Claim 14, **characterized in that** they are employed in an amount from 0.01 to 10% by weight, preferably 0.1 to 5% by weight, based on the weight of the mineral binder.

## Revendications

1. Copolymères, comprenant :
a) 10 à 90 % en moles de groupes constitutifs de formule (Ia) et/ou (Ib) 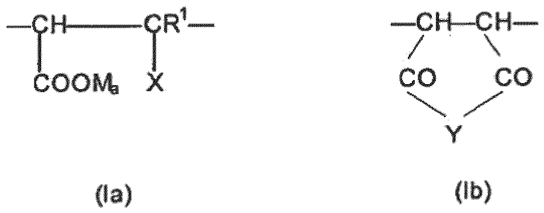 dans lesquelles
R¹ = hydrogène ou un radical hydrocarboné aliphatique de 1 à 20 atomes C,
X = H, -COOMₐ, -CO-O (CₘH₂ₘO)ₙ-R², -CO-NH-(CₘH₂ₘO)ₙ-R²,
M = hydrogène, un cation métallique mono- ou bivalent, un ion ammonium, un radical amino organique,
a = ½ ou 1,
R² = hydrogène, un radical hydrocarboné aliphatique de 1 à 20 atomes C, un radical hydrocarboné cycloaliphatique de 5 à 8 atomes C, un radical aryle éventuellement substitué de 6 à 14 atomes C,
Y = 0, NR²,
m = 2 à 4 et
n = 0 à 200,
b) 1 à 89 % en moles de groupes constitutifs de formule générale (II) 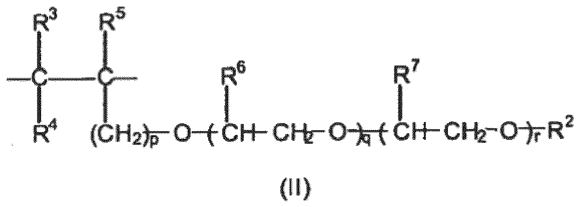 dans laquelle
R³ = H, un radical hydrocarboné aliphatique de 1 à 6 atomes C,
R⁴ = un radical hydrocarboné aliphatique de 1 à 6 atomes C, un radical hydrocarboné cycloaliphatique de 5 à 8 atomes C et phényle,
R⁵ = H, un radical hydrocarboné aliphatique de 1 à 5 atomes C,
R⁶, R⁷ = indépendamment l'un de l'autre H, un radical hydrocarboné aliphatique de 1 à 6 atomes C,
p = 0 à 3,
q + r = 0 à 500,
et
R² a la signification indiquée précédemment,
c) 0 à 10 % en moles de groupes constitutifs de formule (IIIa) et/ou (IIIb) 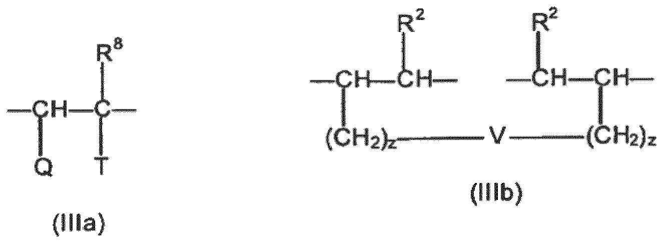 dans lesquelles
Q = -H, COOMₐ, -COOR⁹,
T = 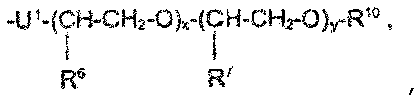 - (CH₂) _{z}-V- (CH₂) _{z}-CH=CHR², -COOR⁹ lorsque Q = -COOR⁹ ou COOMₐ,
U¹ = -CO-NH-, -0-, -CH₂O-,
U² = -NH-CO-, -O-, -OCH₂-,
V = -O-CO-C₆H₄-CO-O-,
R⁸ = H, CH₃,
R⁹ = radical hydrocarboné aliphatique de 3 à 20 atomes C, radical hydrocarboné cycloaliphatique de 5 à 8 atomes C, radical aryle de 6 à 14 atomes C,
R¹⁰ = 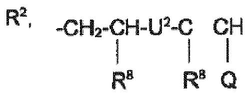 z = 0 à 4,
x = 1 à 150,
y = 0 à 15, et
R², R⁶ et R⁷ ont la signification indiquée précédemment.

2. Copolymères selon la revendication 1, **caractérisés en ce qu'**ils contiennent en outre
d) 0 à 50 % en moles de groupes constitutifs (IV), dont les monomères sont un dérivé de vinyle ou de l'acide (méth)acrylique.

3. Copolymères constitués par
a) 10 à 90 % en moles de groupes constitutifs de formule (Ia) et/ou (Ib) 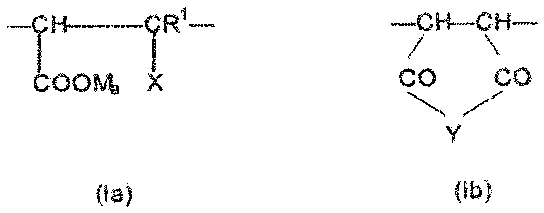 dans lesquelles
R¹ = hydrogène ou un radical hydrocarboné aliphatique de 1 à 20 atomes C,
X = H, -COOMₐ, -CO-O(CₘH₂ₘO)ₙ-R², -CO-NH-(CₘH₂ₘO)ₙ-R²,
M = hydrogène, un cation métallique mono- ou bivalent, un ion ammonium, un radical amino organique,
a = ½ ou 1,
R² = hydrogène, un radical hydrocarboné aliphatique de 1 à 20 atomes C, un radical hydrocarboné cycloaliphatique de 5 à 8 atomes C, un radical aryle éventuellement substitué de 6 à 14 atomes C,
Y = 0, NR²,
m = 2 à 4 et
n = 0 à 200,
b) 1 à 89 % en moles de groupes constitutifs de formule générale (II) 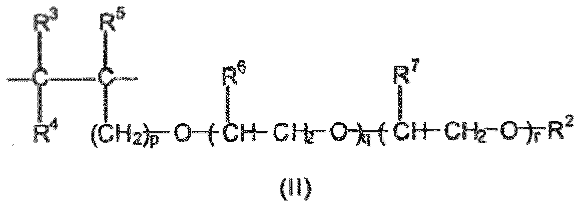 dans laquelle
R³ = H, un radical hydrocarboné aliphatique de 1 à 6 atomes C,
R⁴ =un radical hydrocarboné aliphatique de 1 à 6 atomes C, un radical hydrocarboné cycloaliphatique de 5 à 8 atomes C et phényle,
R⁵ = H, un radical hydrocarboné aliphatique de 1 à 5 atomes C,
R⁶, R⁷ = indépendamment l'un de l'autre H, un radical hydrocarboné aliphatique de 1 à 6 atomes C,
p = 0 à 3,
q + r = 0 à 500,
et
R² a la signification indiquée précédemment,
c) 0 à 10 % en moles de groupes constitutifs de formule (IIIa) et/ou (IIIb) 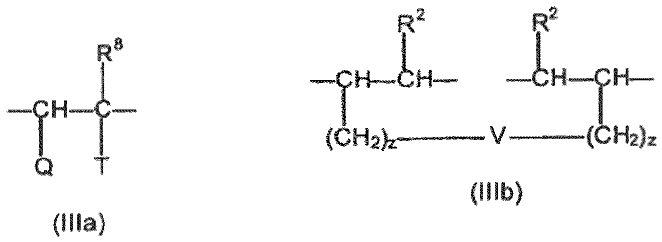 dans lesquelles
Q = -H, -COOMₐ, -COOR⁹,
T = 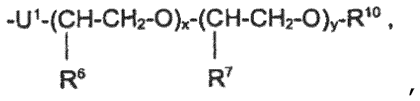 - (CH₂) _{z}-V- (CH₂) _{z}-CH=CHR², -COOR⁹ lorsque Q = -COOR⁹ ou COOMₐ,
U¹ = -CO-NH-, -0-, -CH₂O-,
U² = -NH-CO-, -O-, -OCH₂-,
V = -O-CO-C₆H₄-CO-O-,
R⁸ = H, CH₃,
R⁹ = radical hydrocarboné aliphatique de 3 à 20 atomes C, radical hydrocarboné cycloaliphatique de 5 à 8 atomes C, radical aryle de 6 à 14 atomes C,
R¹⁰ = 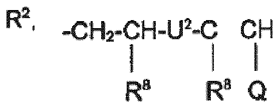 z = 0 à 4,
x = 1 à 150,
y = 0 à 15, et
R², R⁶ et R⁷ ont la signification indiquée précédemment, et
d) 0 à 50 % en moles de groupes constitutifs (IV), dont les monomères sont un dérivé de vinyle ou de l'acide (méth)acrylique.

4. Copolymères selon les revendications 1 à 3, **caractérisés en ce que** R¹ représente l'hydrogène ou un radical méthyle.

5. Copolymères selon les revendications 1 et 4, **caractérisés en ce que** M signifie un cation métallique mono- ou bivalent choisi dans le groupe constitué par les ions sodium, potassium, calcium ou magnésium.

6. Copolymères selon les revendications 1 à 5, **caractérisés en ce que** lorsque R² = phényle, le radical phényle est encore substitué par des groupes hydroxyle, carboxyle ou acide sulfonique.

7. Copolymères selon les revendications 1 à 6, **caractérisés en ce que** p = 0 dans la formule (II).

8. Copolymères selon les revendications 1 à 7, **caractérisés en ce qu'**ils contiennent 40 à 75 % en moles de groupes constitutifs de formule (Ia) et/ou (Ib), 20 à 55 % en moles de groupes constitutifs de formule (II), 1 à 5 % en moles de groupes constitutifs de formule (IIIa) et/ou (IIIb).

9. Copolymères selon les revendications 2 à 8, **caractérisés en ce qu'**ils contiennent en outre jusqu'à 50 % en moles, notamment jusqu'à 20 % en moles, par rapport à la somme des groupes constitutifs de formule (I), (II) et (III), de groupes constitutifs (IV), dont les monomères sont un dérivé de vinyle ou de l'acide(méth)acrylique, notamment le styrène, l'α-méthylstyrène, l'acétate de vinyle, le propionate de vinyle, l'éthylène, le propylène, l'isobutène, la N-vinylpyrrolidone, l'acide allylsulfonique, l'acide méthallylsulfonique, l'acide vinylsulfonique, l'acide vinylphosphonique, les (méth)acrylates d'hydroxyalkyle, l'acrylamide, le méthacrylamide, l'AMPS, le méthacrylate de méthyle, l'acrylate de méthyle, l'acrylate de butyle ou l'acrylate de cyclohexyle.

10. Copolymères selon les revendications 1 à 9, **caractérisés en ce qu'**ils présentent un poids moléculaire moyen de 5 000 à 100 000 g/mol.

11. Procédé de fabrication des copolymères selon les revendications 1 à 10, **caractérisé en ce que** 10 à 90 % en moles d'un dérivé d'acide mono- ou dicarboxylique insaturé, 1 à 89 % en moles d'un éther alcénylique d'oxyalkylène glycol, 0 à 10 % en moles d'un composé vinylique de polyalkylène glycol ou d'ester sont copolymérisés à l'aide d'un démarreur radicalaire et éventuellement en outre de jusqu'à 50 % en moles, notamment jusqu'à 20 % en moles, par rapport au monomères contenant les groupes constitutifs selon les formules (I), (II), (III) et (IV), d'un dérivé de vinyle ou de l'acide (méth)acrylique.

12. Procédé selon la revendication 11, **caractérisé en ce que** la polymérisation est réalisée en solution aqueuse à une température de 20 à 100 °C.

13. Procédé selon la revendication 12, **caractérisé en ce que** la concentration de la solution aqueuse est de 30 à 50 % en poids.

14. Utilisation des copolymères selon les revendications 1 à 10 en tant qu'additifs pour des suspensions aqueuses à base de liants minéraux ou bitumineux, notamment de ciment, de gypse, de craie, d'anhydrite, ou d'autres liants à base de sulfate de calcium, ainsi qu'à base de liants de dispersions en poudre.

15. Utilisation des copolymères selon la revendication 14, **caractérisée en ce qu'**ils sont utilisés en une quantité de 0,01 à 10 % en poids, de préférence de 0,1 à 5 % en poids, par rapport au poids du liant minéral.
